# EUROPEAN PATENT APPLICATION

(11) **EP 1 491 510 A1**
(43) Date of publication of application: **29.12.2004**
(21) Application number: 04012872.0
(22) Date of filing: 01.06.2004
(51) Int. Cl.: C03B 33/07, C03B 33/02, C03B 33/027

(54) **Device for the correction of the cutting geometry and for cutting glass plates obliquely or curvilinearly and procedure for the correction of the cutting geometry and for cutting glass plates obliquely or curvilinearly**

(30) Priority: 24.06.2003 IT TV20030092
(71) Applicant: FOR.EL. BASE di VIANELLO FORTUNATO & C. S.n.c., 31056 Vallio di Roncade (Treviso) (IT)
(72) Inventor: Vianello, Fortunato, 31056 Vallio Di Roncade (Treviso) (IT); Moschini, Dino, 31056 Roncade (Treviso) (IT)

(57) **Abstract**

The object of this application is a device for the correction of the cutting geometry and for the making of oblique or curvilinear cuts on glass plates and a procedure for the correction of the cutting geometry and the making of oblique or curvilinear cuts on glass plates. In the known technique these operations are either carried out manually or by means of complicated mechanisms, in any case moving the glass plate. Essential characteristics of the invention are the fact that the whole complete cutting bridge is inclined while the glass plate is not adjusted angularly. In particular the solution is obtained through a system whereby the plate's geometry is detected and the cutting bridge is inclined.

## Description

### STATE OF THE TECHNOLOGY AND RELATED ISSUES

Nowadays it is known to cut monolithic glass plates, stratified glass plates and armoured glass plates on "cutting tables" whether they are arranged horizontally or vertically. In all cases however, either to get a cut with as rectangular geometry as possible or to obtain a polygonal shape, it is always the glass to be oriented with regard to the cutting device, the so-called "bridge".

To better understand the configuration of the glass plate, the three fundamental types listed above are briefly described.

Monolithic glass is the easiest case and the most widespread in the past, and it consists of a plate generally produced with a maximum dimension of 6000 mm x 3210 mm and with a thickness in the range of 3 mm to 19 mm.

Stratified glass is the result of the marriage of two monolithic glass pates generally of the same thickness but not excluding the combination of two different thickness, obtained by means of polyvinyl butyral membrane hot pressed and fixed in autoclave.

The most frequent combinations of thicknesses expressed in the following order: thickness 1^{st} glass / thickness membrane / thickness 2^{nd} glass, all expressed in mm: 3/0.38/3; 4/0.38/4; 4/0.76/4; 4/1.52/4 etc. up to 10/4.56/10. Said glass has special safety, splinter-proof, reinforced properties.

The armoured glass is the result of the marriage of at least three plates of monolithic glass, generally of considerable thickness of the order of 19 mm again obtained through the intermediate polyvinyl butyral membrane. This glass have special safety, splinter-proof, reinforced, anti-vandal, bullet-proof qualities.

Respectively the three types of glass require machines or machine lines for the so-called cutting of the "origin" format to obtain the "destination" formats with different configuration especially as it concerns the so-called cutting "bridge" containing the respective cutting tools. In the case of monolithic glass the cutting process is obtained by cutting and break (tools: scoring wheel and truncation bar). In the case of stratified glass the process is obtained through a double opposed scoring, double sequential opposed breaking, stretch/heating or stretch/cut or stretch/heating/cut of the membrane (tools: double scoring wheels, double truncating bar, stretch vices, heaters, blade).

In the case of armoured glass, the cutting process is obtained through an abrasive action whether caused with high-pressure jet of water with suspension of abrasive particles or through diamond-coated wheel in a flow of coolant water.

A very widespread use of the formats of glass obtained with the cutting operation is that for the manufacture of "insulating glass" i.e. the item obtained from the marriage of two or more plates of glass separated by one or more hollow spacer frames micro-perforated on the face towards the inner chamber, containing a hygroscopic, granular material and the inner chamber that can contain just air or gas or a mixture of gasses that give the glass chamber heat and sound insulation properties.

The "plates of glass" used in the glass chamber composition can have various conformations depending on their usage for example the outer glass (outer meaning with respect to the building) can be normal or reflecting (to limit the penetration of heat in summer) or stratified/armoured (for the purposes of splinter-proofing/reinforcement/anti-vandalism/bullet proofing) or stratified/tempered (for safety purposes) or combined (for example reflecting and stratified to get a combination of properties), the inner glass (inner with respect to the building) can be normal or low emissivity (to limit heat loss during the winter) or stratified/tempered (for safety functions) or combined (for example low-emission and stratified to get a combination of properties).

The research of previous patents registered in the glass cutting sector, actually very crowded because it has added a large series of titles to industrial property rights of which the most significant are listed. EP 0 834 479; EP 0 835 847; EP 0 837 040; all owned by the same applicant making this application, this application being an improvement of all three of these titles; DE 42 34 536 being owned by Armatec and being an example of the problem to resolve but presenting a costly, partial, low quality result; EP 0 807 609 owned by Hegla and constituting an example of a solution limited exclusively to orthogonal cuts. These versions do not teach or herald anything regarding the inventive concept underlying this application, in fact the teaching in some cases (Armatec) is even opposite in other words it is that of positioning the glass in respect of the cutting device.

The biggest problems in the abovementioned known techniques are the following:
# insufficient precision in the geometry of the "destination" format obtained from the glass plate;
# complexity of the mechanisms for the correction of the orthogonality or the adjustment of the obliquity required (or the absence of mechanisms so that these phases are carried out manually;
# mediocre cutting quality;
# excessively long cutting times.

Fully manual procedures are also known in which the glass plates, resting on support surfaces are scored and truncated (and if necessary stretched, heated near the separation and cut off in corresponsence of the membrane, in the case of stratified glass) by means of manual tools, in these cases in addition to the abovementioned problems the following are added:
# the risk of accidents given the manual nature of the operations

The main job that is the subject of this application is therefore that of solving the technical problems show by eliminating all the drawbacks that the known cited techniques embodies and therefore finding a procedure and a machine that enable a cut such as to obtain a destination format with a geometry that is as rectangular as possible or a cut such as to achieve a destination format with the required polygonal geometry to be obtained.

### DESCRIPTION OF THE INVENTION

The synthetic description of the drawings and the detailed description of a way of embodying the invention will clarify how the invented object in this application can be actuated.

### BRIEF DESCRIPTION OF THE FIGURES

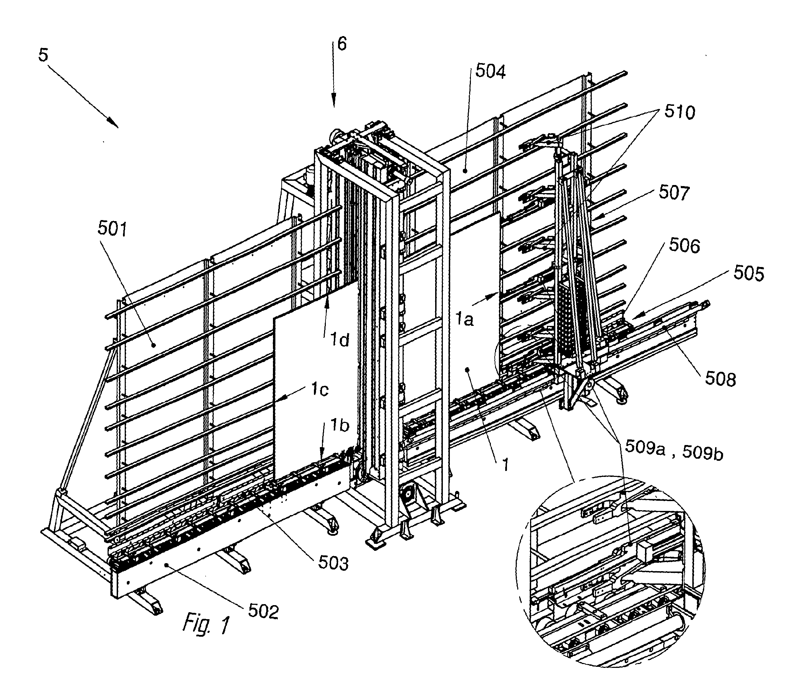

FIGURE 1 represents the known machine in drawing form in an axonometric view in which the device that is the subject of this application is applied.

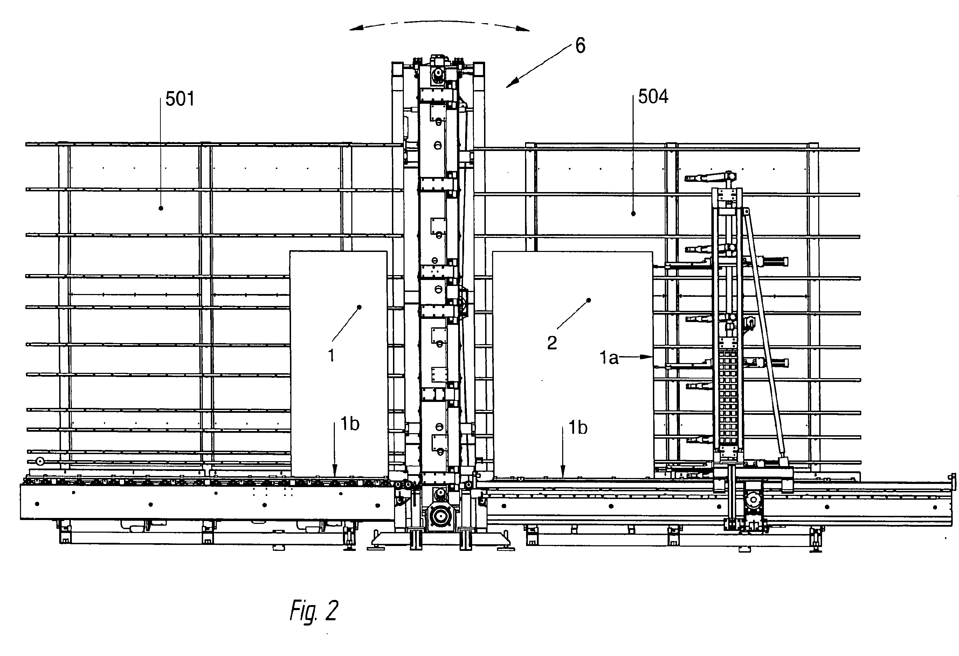

FIGURE 2 shows a frontal view of the machine referred to above in the situation of cutting an "origin" plate for fractioning in "destination" plates or for the later fractioning of the "destination" plates (progressive cutting levels) the "destination" plates having rectangular shape (with greater precision of orthoganality in the case of the device that is the subject of this application is used).
FIGURE 3 shows a frontal view of the machine referred to above in the situation of cutting an "origin" plate for the fractioning into "destination" plates or for the subsequent fractioning of the "destination" plates (progressive cutting levels), the "destination" plates having trapezoidal shape (and therefore obtainable through the inclination of the cutting bridge simply with the device that is subject of this application).

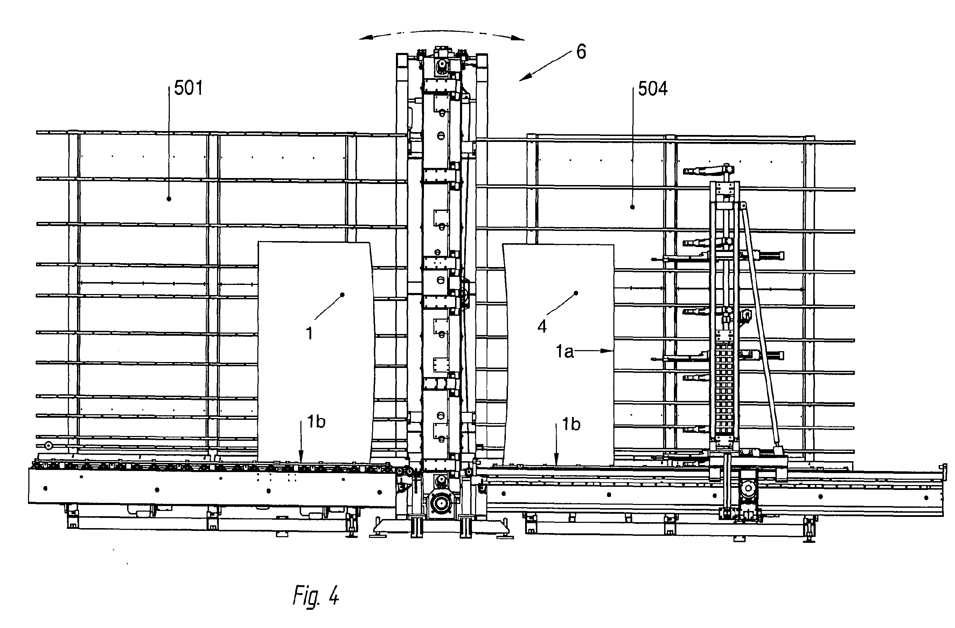

FIGURE 4 shows a frontal view of the machine mentioned above in the situation of cutting an "origin" plate for fractioning in "destination" plates or for subsequent fractioning of the "destination" plates (progressive cutting levels), the "destination" plates having a slightly curvilinear form on some sides (and therefore obtainable only with a particular configuration of the device that is object of this application, version that will be explained further on).

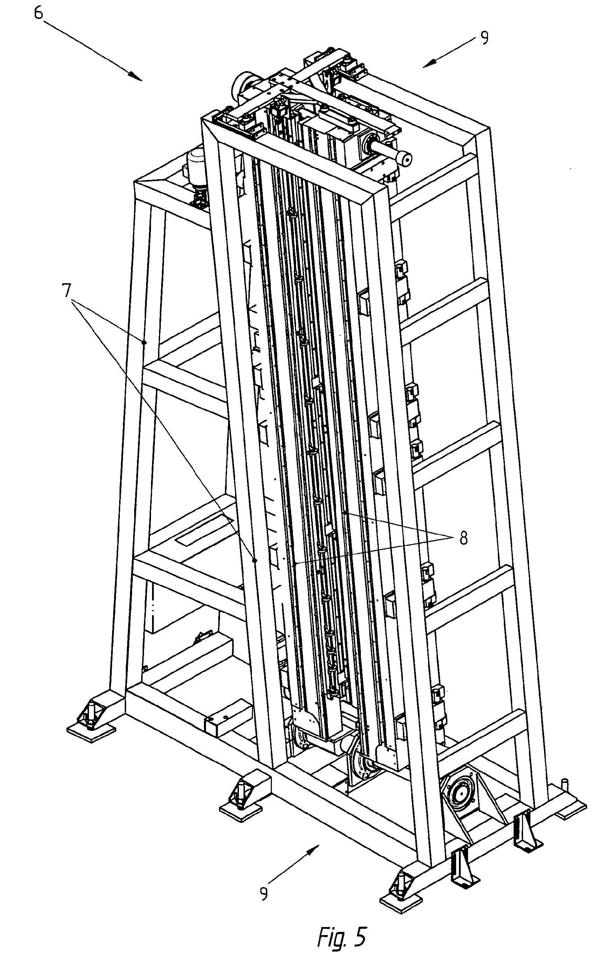

FIGURE 5 shows an axonometric view of just the cutting bridge with the main components subdivided into groups.

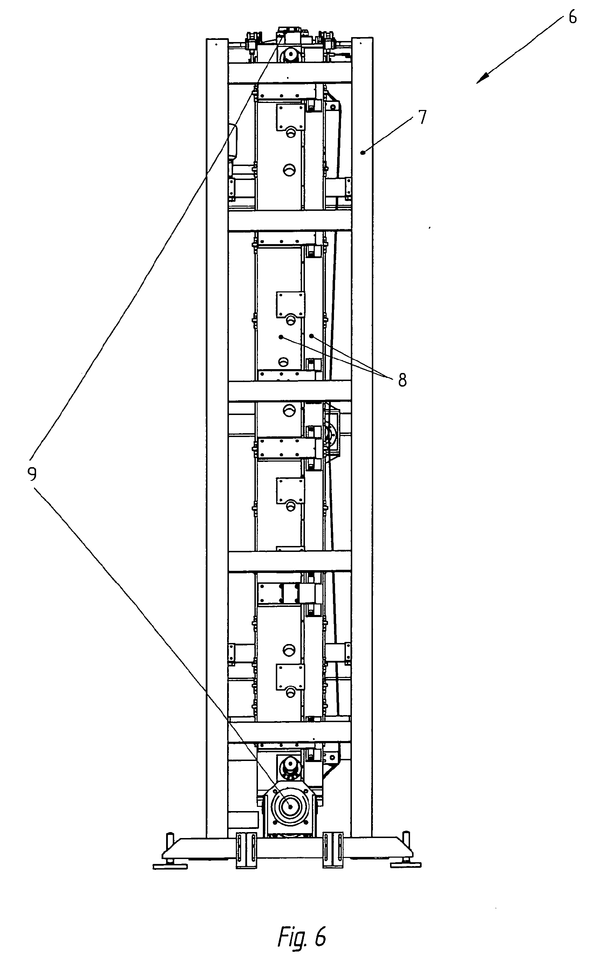

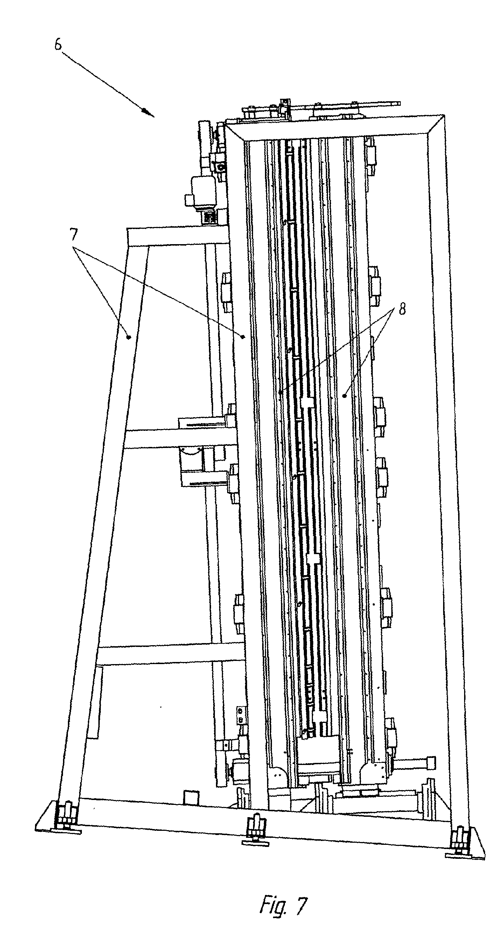

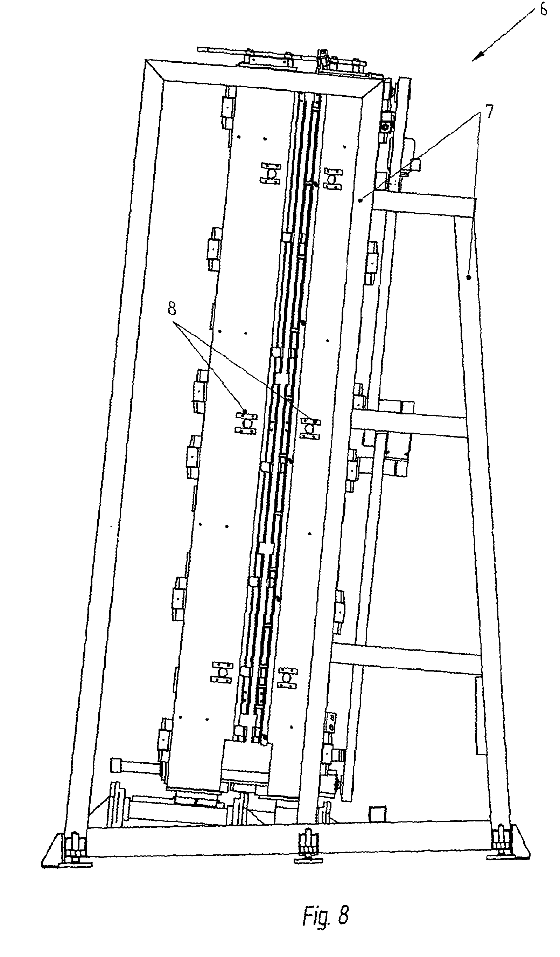

FIGURES 6, 7 and 8 show the three views: frontal, glass input side, glass output side.
FIGURE 9 summarises the inventive concept this application refers to.

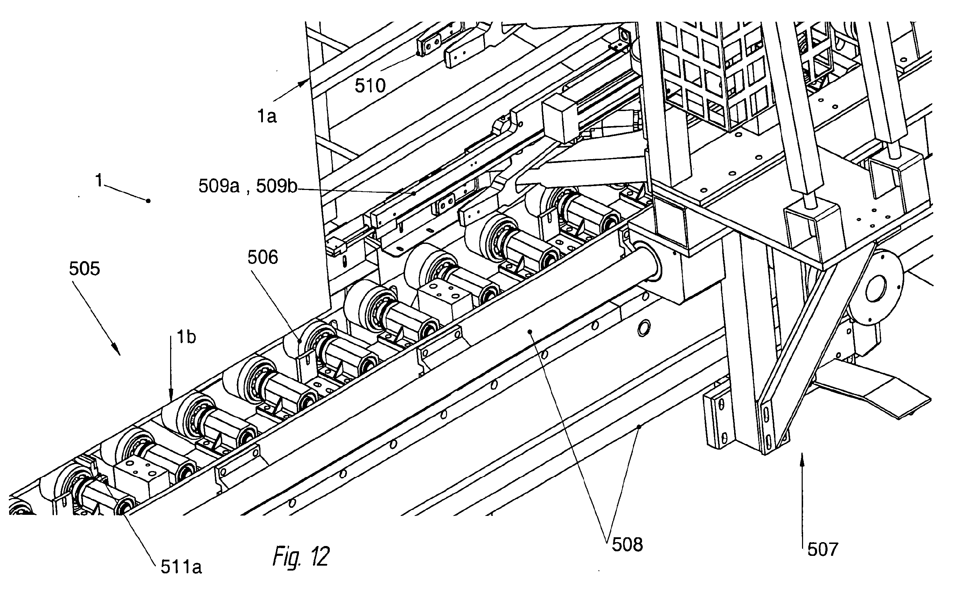

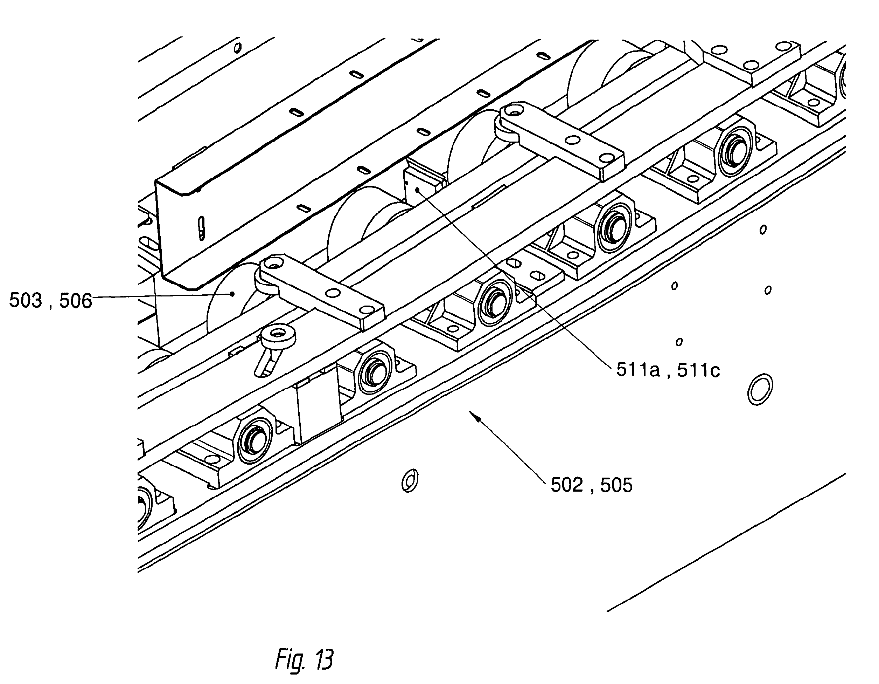

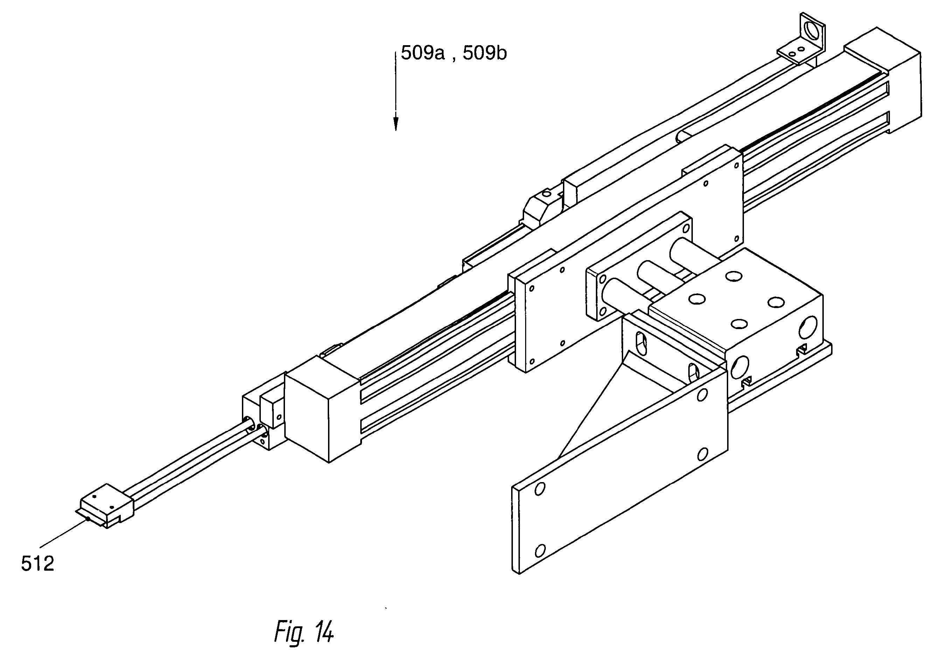

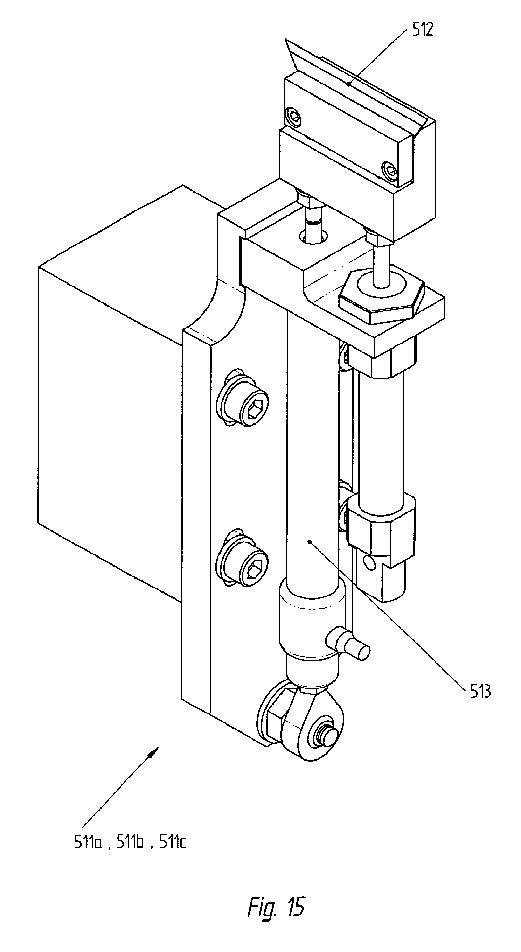

FIGURES 10 - 15 show separately in such a way as to streamline the main figures the constructive details of the invention that are treated in the description.
FIGURE 16 shows the solution referred to in figure 3 but extends the possibility of oblique cuts to 45°.

### METHODS FOR IMPLEMENTING THE INVENTION

We now come to the detailed description of one way of making the invention.

To better describe a method of implementing the invention, and that includes all the equivalents, reference is made to the figures covering the embodiment in which the inventive concept is most evident, mentioning possible alternative configurations that then will be better defined in the claims, showing the phases of the functioning cycle and the mechanisms used.

With reference to the set of figures, the identification criteria are specified: numbering starting from (1) for the main assemblies in order to have an overall view of the same; numbering from (x01), the first figure of which is that of the group it belongs to, for the constructive details and mechanisms.

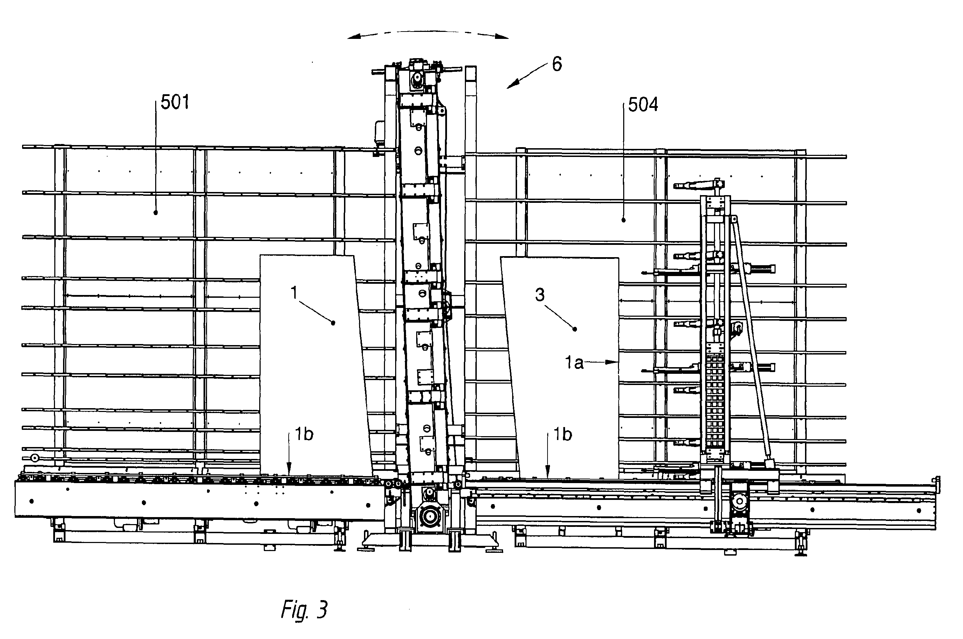

With (1) the origin plate of glass is identified (but also the destination formats obtained after one or more cutting levels) the sides of which for the purposes of explaining the device and the procedure are designated:
(1a), (1b), (1c), (1d); with (2) the destination formats of rectangular type; with (3) the destination formats with polygonal type, generally triangular or trapezoidal, with (4) the destination formats with slightly curvilinear shape, the subsequent numbering identify the following respectively:
   (5) the complete cutting machine or line
   (6) the cutting bridge
   (7) the static structure of the cutting bridge
   (8) the known mechanisms of the cutting bridge
   (9) the device that is the subject of this application,
incorporated in assembly (7) in the case of the range of limited inclination as represented in figure 3, while it can also extend to outside the assembly (7) to make inclinations up to 45°.

A preferred embodiment of the invention is described below, to make it easier to understand it is advisable to follow the figures at the same time because the lists of components are many and as far as possible they are referred to in the same order in which they appear in the figures.

A premise must be remembered regarding the orientations: when vertical is mentioned it means slightly inclined to the vertical, in fact the transport of the glass takes place on the so-called shoulders, the support plane of which is inclined 6° to the vertical plane, just as the lower support rollers belonging to the conveyor have an inclined axis of 6° to the horizontal plane.

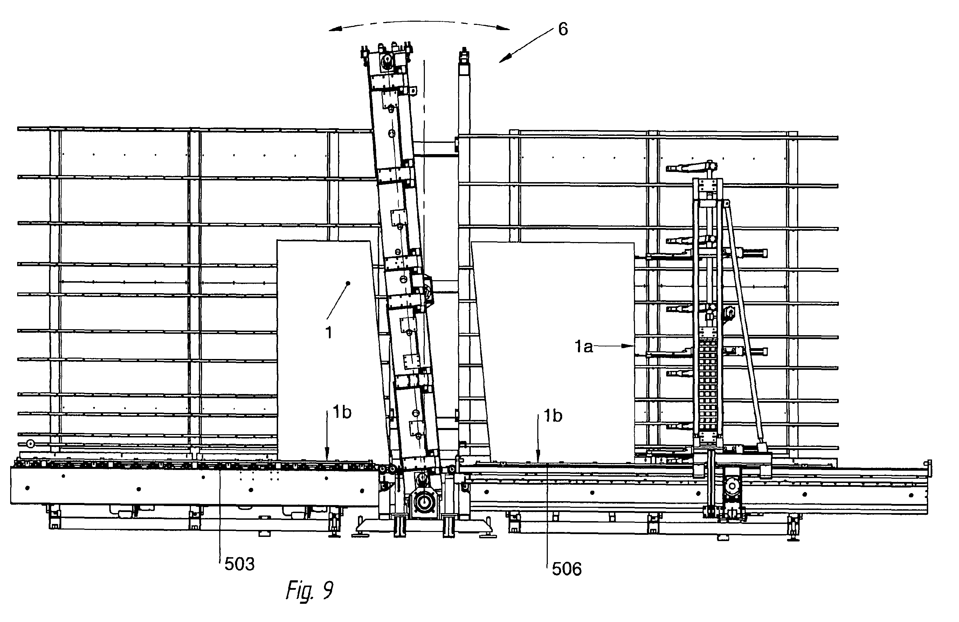

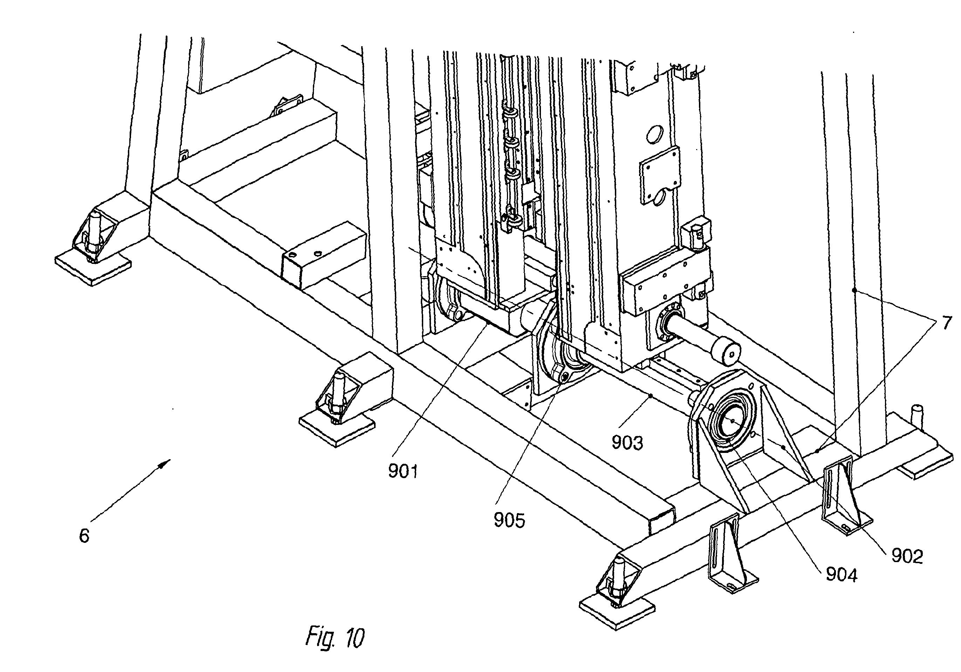

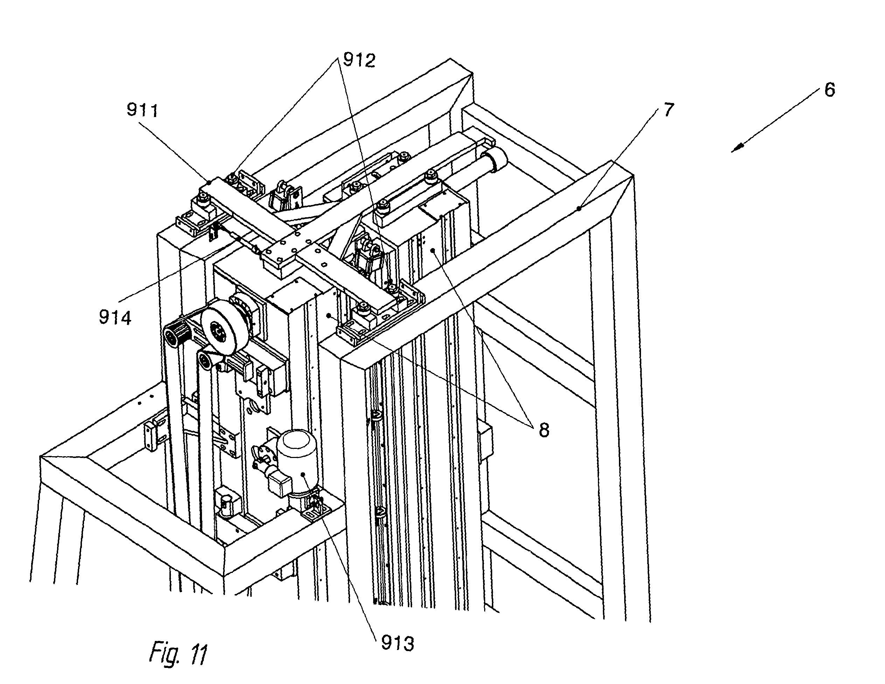

The glass sheet (1) loaded manually or by a known loader onto the input shoulders (501) of the cutting line, moves forward transported by the conveyor (502) by means of motor-driven, support and drive, rollers (503) towards the cutting bridge (6). Similarly, down line from the cutting bridge (6) an output shoulder (504) consisting in its turn of a conveyor (505) and motor-driven rollers (506) is situated. The output shoulder (504) is also fitted with a motor-driven mobile bridge (507) sliding on guides (508) and with the measuring devices (509a),(509b) as well as the holding/pulling grippers (510) interacting with the side (1a) of the glass plate. These devices belong to the known technique referred to EP 0 834 479 but, in the combination with invention that is the subject of this application, are used with supplementary functions. We now come to describing the innovative part proper. The cutting bridge (6), consisting of a fixed structure (7) containing known mechanisms (8) to carry out cutting, truncating, membrane separation (as in EP 0 834 479) or for the mechanical cutting operation (as in EP 0 837 040) is equipped in the part containing the mechanisms for the cutting operation, with additional devices , all belonging to assembly (9), that enable the mechanism assembly (8) to incline with respect to the conveyor line consisting of the upper surface of the rollers (503, 506) , coinciding with the lower side (1b) of the glass plate (1). These additional devices as can be clearly deduced from figures 9, 10 and 11 consist of the following essential components: hinges (901) with a fulcrum on the axis (902), in the lower part of the bridge (6), bar (911) sliding on guides (912), in the upper part of the bridge (6).

In greater detail, the cutting bridge divided into two half bridges, one fixed at the rear and one at the front that slides to allow to permit the opening and closing against the glass plate (1) both slides and swings on the axis (902) materially obtained with a pin (903) swinging on bearings (904) fixed to the structure (7) by means of the supports (905). The upper part of the cutting bridge (6), as shown in the figure (11) (in a version contained in the overall dimensions of the structure (7), but the principle is the same also for extensions outside the structure (7)), it contains, in addition to the mechanisms (911) and (912) described above, the linear actuator (913) that moves the assembly of glass cutting mechanisms (8) with respect to the structure (7), and then with respect to the base of the glass thereby obtaining the cut o either intentionally orthogonal through the correction of the orthogonality error or intentionally inclined, and finally the potentiometer (914) for measuring the displacements between the mechanism assembly (8) and the structure (7).

The information from the feeler pins (509a and 509b) (also connected to the respective know potentiometers) interacting against the vertical side (1a) of the glass plate (1), from feeler pins (511a, 511b, 511c) described below (connected to the potentiometers (513)) interacting with the horizontal side (1b) of the glass plate (1), from potentiometer (914), are processed by a PLC (programmable logic controller) in combination with a PC (process computer), so as to orient the cutting bridge mechanisms (8) by means of the actuator (913) to form the required angle with the base (1b) of the glass plate (1).

To complete the assembly of mechanisms (9) distributed in the bridge (6), the conveyors (502) and (505) as well as the bridge itself (6) are fitted with feeler pins (at least but not limited to 3), called for the sake of convenience (511a, 511b, 511c), because they belong to the to conveyor line consisting of the upper side of the rollers (503, 506). An important characteristic of the feeler pins, or better those (509a and 509b) belonging to the mobile bridge (507) and those (511a, 511b, 511c) belonging to the conveyor line are equipped with a blade (512) that can, when pushed by a know pneumatic cylinder with a force that is anyway less than the minimum reaction that the glass can exert in opposition, to penetrate the polyvinyl butyral membrane in order to make contact with the glass, generally the polyvinyl butyral membrane protruding slightly from the confines of the glass edges.

Said feeler pins precisely show the lie of the side (1b), of the glass plate (1) because the line on the upper side of the rollers (503, 506) as it is made of material subject to deformation and wear is not reliable as an effective reference of the base (1b) of the glass plate (1). Furthermore in the case of narrow glass strips arranged vertically (as happens frequently in the glass plate cutting process to allow the most effective split of the "origin" plate into "destination" forms by minimising the waste) it is important to keep the longer sides parallel each other but it is important to check if the orthogonality error that is seen from the combination of the readings of all the feeler pins (in the 509 series and in the 511 series) is compatible with the required results.

We now come to describing how the invention operates to make the cuts in the glass "origin" plate (1) obtaining the "destination" formats (2), (3), (4), respectively in the types of cut:

### A) PERFECTLY SQUARED WITH THE BASE (2)

Initial mention must be made that for all the types, the dimension of the cut required is determined by the position the mobile bridge (507) is stopped at, that then by means of a signal received from the feeler pins (509a and 509b) stops the plate in such a way that the cutting tools (belong to the assembly of mechanisms (8) on the fixed bridge (6)) coincide with the vertical of the plate distant from the side (1a) a measurement equal to that required.

In this case (A) the concept is simple. The side of the base (1b) is shown with regard to the lie by a series of sensors (511) and cutting mechanisms (8) on the mobile bridge (6), thanks to the regulation of the orthogonality obtained with mechanisms in the assembly (9) are perfectly arranged (within the tolerance permitted by the system) at 90° with respect to the actual lying of the base side (1b).

It is advisable to carry out this operation however the first time "origin" plate (1) is positioned in order to adjust the first side (1a) of the glass plate, that could, as generally happens, have errors in orthogonality with respect to the base (1b). Since this operation, called trimming, entails the waste of a strip of glass, it is possible to limit the size of this removal of material to just a few mm by just scoring the glass plate and later carry out the truncating operation through a manual operation.

### B) INCLINDED COMPARED WITH THE BASE (3)

In this case (B) the concept is also simple: the base side (1b), is detected with regard to the lie, by a set of sensors (511) and cutting mechanisms (8) on the mobile bridge (6), thanks to the inclination adjustment of the same obtained with the mechanisms in the assembly (9) are arranged with the required angle (within the tolerance permitted by the system) with respect to the actual lying of the base side (1b).

### C) SLIGHTLY CURVILINEAR (4)

This case (C) is the most complex case, not so much because of the cut that can be obtained in the same way as cases A and B, as for the limitations of the later membrane truncation and separation phases because, although they can be carried out manually also for accentuated curvatures, they can only be carried out automatically for curves that do not differ very much from the straight line, because the mechanisms (truncating bars and stretching vices) are located along a straight line (while not precluding a variable curving solution that would however result very complex and expensive even if known). However this configuration can simply resolve those several cases in which some sides of the glass is required to differ slightly from the straight line (while not precluding a variable curvilinear solution that would however be very complex and expensive even though noted). However this configuration can easily resolve those many cases in which some sides of the glass is required to differ slightly from the rectilinear shape.

Obtaining slightly curvilinear scoring is simple because no additional mechanisms are required beyond those that already exist according to the inventive concept of this invention (9), although just a logical processing of the translation of the tool (or tools in the case of stratified glass) of scoring and rotation of the mechanisms (8) on the cutting bridge (6); the principle, by the way simplified, is to work according to a polar axis and a Cartesian axis (just 2 axis) instead of two Cartesian axis and one polar (necessary for the orientation of the scoring wheel bringing to three the number of interpolated axis) typically used in the horizontal cutting tables.

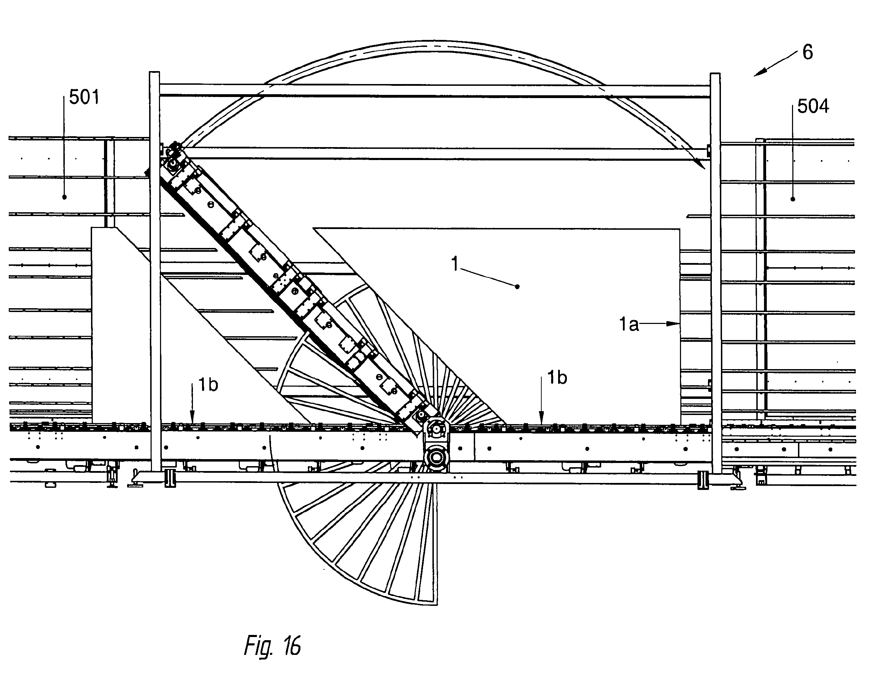

An important configuration of the device that is the subject of this application is the configuration that allows the achievement of inclination angles up to 45°, that is to say that activates the possibility of cutting any polygonal shape. As it can be deduced from figure 16, that is obtained through the execution of the mobile sector-type conveyors in such a way that the glass can be simply rested against the vertical plane (pseudo-vertical) of the shoulders.

The description above refers to a cutting line that goes from left to right, it is easy to image a description and relative figures in the case of mirrored arrangements or arrangements that are anyway different.

Naturally all the movements connected with the phases of the cycle are interlocked with each other by means of a parallel logic that is any way always active for the purposes of avoiding conditions of reciprocal interference between the actuating parts, tools and working materials during the process.

This invention can be produced in many different versions (in comparison with what can be seen in the drawings, the details of which are evident and eloquent) all falling into the field of equivalence with the inventive concept, like for example the mechanical solutions for the power movements of the tools, the support and drive of the glass etc. the means of activating that might be electric, electric-electronic , pneumatic, hydraulic and/or combined etc, the means of control that could be electronic or fluidic and/or combined etc.

A constructive variant, even though complex is that made from the combined logic of the drives of the scoring tool movement and the inclination of the rotating part of the cutting bridge in such a way as to allow a slightly curved scoring of the glass plate. To obtain that, the electric drives of the actuator (913) and of the known motor for moving the tool are linked through electrical axis (numerical control). In this configuration the subsequent truncation of the cut line, as for the separation of the membrane, are possible in the same automatic machine only if the curved line diverges slightly from the straight line. In the case of more accentuated divergences, anyway the curvilinear scoring is possible and it is then possible performing the subsequent phases manually.

The constructive details can be substituted with others that are technically equivalent. The materials and the sizes can be any according to the needs in particular deriving from the sizes (base and height) of the "origin" plate glass (1).

### INDUSTRIAL APPLICATION

It is understandable that the industrial application is a sure success because the cutting of the glass plate [1] is the operation that precedes all subsequent processes. There is more, the "insulating glass" market is in continuous expansion as, in recent years, all those configurations requiring the use of special glass such as that described in the preamble have increased such market. There is more, the diffusion in addition of shapes that are different from rectangular, so-called shapes, because they are polygonal or curvilinear or mixed, adds still further to the value of this invention, against the limitation of traditional machines that can only work rectangular forms.

## Claims

1. Device for the correction of the cutting geometry and for the execution of oblique or curvilinear cuts incorporated into vertical machines (5) for cutting monolithic, stratified or armoured glass plates (1) **characterised by** the fact that the entire cutting bridge (8) is inclined while the glass plate (1) is not adjusted angularly both for the perfect adjustment of the orthogonal cuts and for oblique or curvilinear cuts.

2. Device as per claim 1 **characterised by** the fact that it is applied to the horizontal machines.

3. Device as per claim 1 **characterised by** the fact that the feeler or feelers (509, 511) transmit the geometrical information to one or more sides of the glass plate (1).

4. Device as per claim 1 **characterised by** the fact that the feelers (509, 511) are fitted with cutting blade to penetrate the plastic membrane of the stratified glass.

5. Device as per claim 1 **characterised by** the fact that the feeler pins (509, 511) are fitted with a heated cutting blade penetrate the plastic membrane of the stratified glass.

6. Device as per claim 1 **characterised by** the fact that through a combination of linear movements of the scoring tool and rotary of the rotating part (8) of the cutting bridge (6) it is possible to carry out curvilinear cuts.

7. Device as per one or more previous claims **characterised by** the fact that the angular adjustment of the rotating part (8) of the cutting bridge (6) can reach or even exceed 45°.

8. Device as per one or more previous claims **characterised by** the fact that the actuator (913) is electric.

9. Device as per one or more previous claims **characterised by** the fact that the actuator (913) is hydraulic.

10. Device as per one or more previous claims **characterised by** the fact that part of the swinging cutting bridge (8) also contains support means to hold the "origin" glass plate (1) and "destination" glass plate (2), (3), (4).

11. Device as per one or more previous claims **characterised by** the fact that a pit in the floor is required to house the glass supports connected to the part of the cutting bridge (8).

12. Device as per claim 11 **characterised by** the fact that the supports of the glass connected to part of the cutting bridge (8) are built up as a fan.

13. Procedure for the correction of the cutting geometry and for the performance of the oblique or curvilinear cut applicable to the vertical machines for cutting monolithic stratified or armoured glass plate **characterised by** the fact that the entire cutting bridge swings while the glass plate (1) is not adjusted angularly.

14. Procedure as per claim 13 **characterised by** the fact that it is applied to horizontal machines.

15. Procedure as per claim 13 **characterised by** the fact the curvilinear scoring is obtained by the simple combination of motions made respectively by a Cartesian axis that moves on a polar axis.
